# EUROPÄISCHE PATENTSCHRIFT

(11) **EP 1 155 619 B1**
(45) Veröffentlichungstag und Bekanntmachung des Hinweises auf die Patenterteilung: **03.08.2005**
(21) Anmeldenummer: 01250176.3
(22) Anmeldetag: 17.05.2001
(51) Int. Cl.: A22C 13/00

(54) **Formgebende Umhüllung für Lebensmittel, sowie Verfahren und Vorrichtung ihrer Herstellung**
Food shaping casing , process and device for its manufacture
Enveloppe façonneuse pour produits alimentaires, procédé et dispositif de sa fabrication

(30) Priorität: 17.05.2000 DE 10024639
(43) Veröffentlichungstag der Anmeldung: 21.11.2001
(73) Patentinhaber: IFG Forschungs- und Vertriebsges mbH Für Kybernetik und Elektronik, 21435 Stelle (DE)
(72) Erfinder: Beuttenmüller, Albert, 21435 Stelle (DE)
(74) Vertreter: Scholz, Hartmut, Dipl.-Ing.

(56) Entgegenhaltungen:
- DD-A- 209 962
- DE-A- 3 902 347
- US-A- 3 857 330
- US-A- 5 545 117
- US-A- 5 724 789
- US-A- 5 906 850

## Beschreibung

Die Erfindung betrifft ein Formteil mit einer unregelmäßigen äußeren Kontur, das aus einer doppelt gelegten, quasi endlosen Folienmaterialbahn aus einem schweißbaren Kunststoff in einer die Materialbahnen verschweißenden und abtrennenden Trennschweißvorrichtung als Umhüllung für Lebensmittel herstellbar ist.

Derartige Formteile, beispielsweise Wursthüllen, wie sie aus der US-A-5 724 789 oder der DE 39 02 347 Al für krumme oder gekräuselte, eine Naturdarmform aufweisende Würste bekannt sind, werden üblicherweise in ihren Längsnähten genäht. Derartige Würsthüllen werden dazu zunächst auf links genäht, dann umgestülpt und mit der Wurstmasse gefüllt. Problem ist dabei, dass beim Füllen ein Innendruck aufgebaut wird, der die Einstichlöcher der Nähte aufweitet. Dadurch kommt es zu Austretungen der Wurstmasse und zu Kochverlusten, die 2 bis 5% betragen können.

Aufgabe der vorliegenden Erfindung ist es, eine Naturdarmform aufweisende Wursthüllen zu schaffen, die dicht und räucherbar sind und eine ausreichend hohe Festigkeit aufweisen.

Gelöst wird diese Aufgabe dadurch, dass die Umhüllung aus einer Mehrschichtfolie besteht und mit einer abziehbaren Griffschutzfolie umgeben ist.

Ferner soll eine Vorrichtung zur Durchführung dieses Verfahrens geschaffen werden.

Diese Aufgabe wird gelöst durch eine Vorrichtung zur Herstellung einer trenngeschweißten Umhüllung für Lebensmittel mit einer unregelmäßigen äußeren Kontur aus einer Mehrschichtfolie, die eine aus einem Obertrum und einem Untertrum bestehende quasi endlose Folienmaterialbahn aus einem schweißbaren Kunststoff aufweist, die Folienmaterialbahn in eine verschweißende und abtrennende, mit einem die Außenkontur der Umhüllung darstellenden, mit Schweißenergie beaufschlagbaren Schweißkonturdraht aufweisende Trennschweißstation einlegbar ist, wobei die Folienmaterialbahn auf eine Grundplatte auflegbar ist und über dem Schweißkonturdraht mit einer Anpressplatte anpressbar ist.

Durch diese Maßnahmen wird eine Vorrichtung zur Herstellung von Wursthüllen mit einer naturdarmnahen Außenkontur geschaffen, die aus Folienmaterial bestehen. Als Folienmaterial ist ein- oder mehrschichtigen Polyethylfolien geeignet. Die Wursthüllen bestehen aus ca. 10 bis 50µm starken Folien, die an ihrer Außenkontur miteinander verschweißt sind. Sie weisen eine ausreichende mechanische Festigkeit auf, und beim Einpressen der Wurstmasse besteht nicht die Gefahr, dass sie platzen oder überdehnt werden. In eine derartig hergestellte Wursthülle kann die vorgesehene Füllmenge gefüllt werden, ohne dass es zu Überdehnungen kommt.

Um den fertigen Würsten ein der Verbrauchervorstellung entsprechendes Äußeres zu geben, kann es vorgesehen sein, die zu verarbeitende Folienmaterialbahn mit einer Dekoration zu bedrucken oder die geschweißte Umhüllung mit einer Textilumhüllung zu versehen. Die verschweißte Umhüllung kann dabei mit der Textilumhüllung verklebt und die Textilümhüllung bedruckt sein.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- **Figur 1**: die Draufsicht auf eine Grundplatte einer Vorrichtung zur Herstellung eines eine beliebige Außenkontur aufweisenden Formteils, beispielsweise einer Wursthülle, mit aufgelegtem, freigeformtem Schweißkonturdraht zum Schweißen und Abtrennen des Formteils;
- **Figur 2**: die schematische Darstellung einer Vorrichtung nach Figur 1 in Vorderansicht, mit auf eine Grundplatte aufgelegtem Schweißkonturdraht und *Anpressplatte* und einer zwischen Schweißkonturdraht und *Anpressplatte* geführter zu verarbeitender, quasi endloser Folienmaterialbahn;
- **Figur 3**: die schematische Darstellung einer fertigen, verschweißten und aus der endlosen Folienmaterialbahn abgetrennten Umhüllung;
- **Figur 4**: den Schnitt durch eine Umhüllung entlang der Linie IV-IV in Figur 3, mit einer zusätzlichen Textilumhüllung und aufgedruckter Dekoration;
- **Figur 5**: die schematische Darstellung einer fertigen, verschweißten und aus der endlosen Folienmaterialbahn abgetrennten Umhüllung, die aus einer Vielzahl von aufeinander aufgebauten und miteinander verbundenen Folienschichten besteht, und die mit einer nichtverbundenen, abziehbaren Griffschutzfolie umgeben ist;
- **Figur 6**: die schematische Darstellung einer fertigen, verschweißten und aus der endlosen Folienmaterialbahn abgetrennten Umhüllung, mit Mikroperforation.

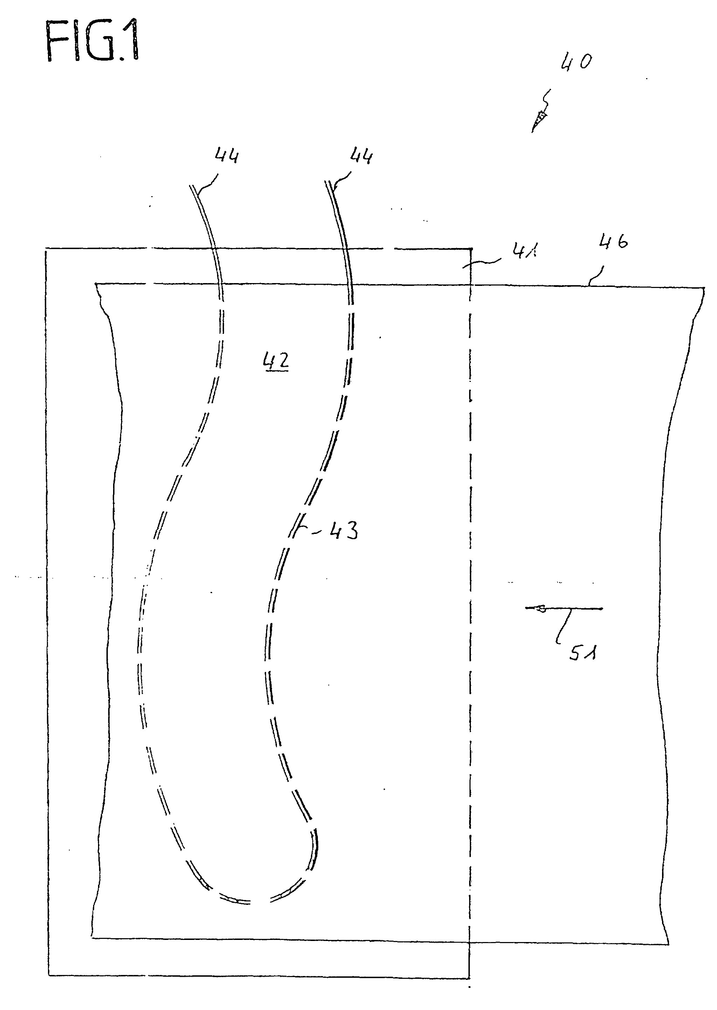

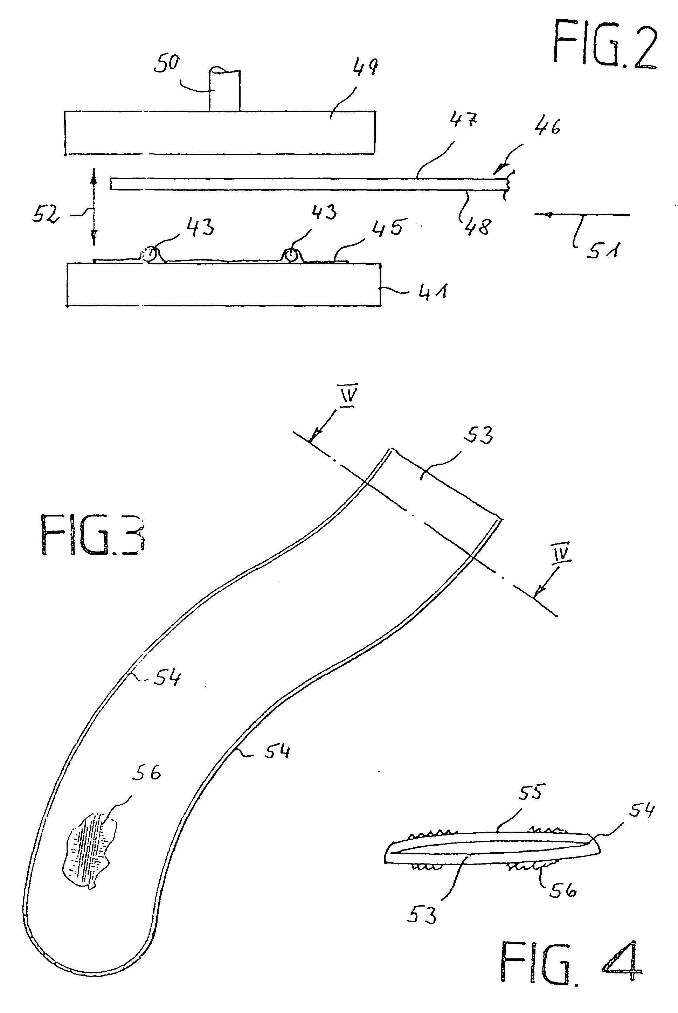

Die in den Figuren 1 und 2 schematisch dargestellte Trennschweißvorrichtung 40 besteht im wesentlichen aus einer Grundplatte 41, auf die ein der Außenkontur 42 einer herzustellenden Umhüllung 53 entsprechende geformter Schweißkonturdraht 43 aufgelegt und fixiert ist. Die Grundplatte 41 besteht aus einem Kunststoff, vorzugsweise aus Polyesther. Der Schweißkonturdraht 43 ist mit elektrischen Anschlüssen 44 versehen, die über die Grundplatte 41 überstehen.

Wie die Figur 2 zeigt, ist der Schweißkonturdraht 43 mit einer Abdeckfolie 45 auf der Grundplatte 41 fixiert. Als Abdeckfolie hat sich eine hochtemperaturbeständige *Kunststofffolie* bewährt. Auf einer Grundplatte 41 können Schweißkonturdrähte 43 für eine Vielzahl von Außenkonturen 42 für Umhüllungen 53 verlegt sein. Die Außenkonturen 42 können dabei gleich oder unterschiedlich sein.

Zur Herstellung eines Formteils, beispielsweise einer Umhüllung 53 für eine Wurst, wie sie in der Figur 3 dargestellt ist, wird eine quasi endlose zu verarbeitende Folienmaterialbahn 46, beispielsweise eine Kunststofffolie, über den Schweißkonturdraht 43 gelegt. Die Folienmaterialbahn 46 besteht beispielsweise aus einer rauchgasdurchlässigen Kunststofffolie. Die Materialstärke ist variabel, sie beträgt ca. 10µm bis 50µm.

Die zu verarbeitende Folienmaterialbahn 46 ist doppelt gelegt und besteht aus einem Obertrum 47 und einem Untertrum 48, die von einem - nicht dargestellten - Coil quasi endlos abgewickelt werden kann.

Nach dem Einlegen der zu verarbeitenden Folienmaterialbahn 46, beispielsweise eine schweißbare Kunststofffolie unterschiedlicher Dicke, kann eine *Anpressplatte* 49 mittels einer Absenkvorrichtung 50 in Schließrichtung 52 (Doppelpfeil) gegen die Grundplatte 41 abgesenkt werden.

Der *Anpressdruck* der *Anpressplatte* 49 ist variabel und kann mit der Schweißenergie, beispielsweise einer elektrischen Energie, die über die elektrischen Anschlüsse 44 in den Schweißkonturdraht 43 geleitet wird, abgestimmt werden.

Durch die Schweißenergie in dem Schweißkonturdraht 43 werden in Abstimmung mit dem *Anpressdruck* der *Anpressplatte* 49 das Obertrum 47 und das Untertrum 48 der zu verarbeitenden Folienmaterialbahn 46 miteinander verschweißt. Gleichzeitig wird die so trenngeschweißte Umhüllung 53 von der restlichen Folienmaterialbahn 46 abgetrennt.

Nach einem anderen Verfahren wird ein computergesteuerter Laser über die doppelt gelegte Kunststofffolienmaterialbahn 46 gefahren, der eine vorprogrammierte Umhüllungsform ausschneidet und gleichzeitig Obertrumm 47 und Untertrumm 48 miteinander verschweißt.

Nach dem Anheben der *Anpressplatte* 49 kann die Folienmaterialbahn 46 in Förderrichtung 52 (Pfeil) weiter gezogen werden und das Verschweißen und Abtrennen der nächsten Umhüllung 53 kann beginnen. Die verbleibenden Reste der Folienmaterialbahn, aus der die Umhüllung 53 herausgetrennt ist, können recycelt werden.

Wie die Figur 3 zeigt, wird die Außenkontur der fertigen, trenngeschweißten Umhüllung 53 von einer umlaufenden Schweißnaht 54 gebildet. Die Schweißnaht 54 entspricht dabei der Form des Schweißkonturdrahtes 43 und ist vor dem Abdecken und Fixieren mit der Abdeckfolie 45 freiformbar. Zugleich mit dem Verschweißen von Ö-Obertrum 47 und Untertrum 48 wird die trenngeschweißte Umhüllung 53 von der zu verarbeitenden Folienmaterialbahn 46 abgetrennt.

Wie die Figur 4 zeigt, kann die fertige Umhüllung 53, beispielsweise eine Wursthülle, mit einer zusätzlichen Textilumhüllung 55 versehen werden. Auf die Textilumhüllung 55 kann eine Dekoration 56 aufgedruckt sein. Eine solche Dekoration 56 kann erhaben und direkt auf die zu verarbeitende Folienmaterialbahn 46 aufgedruckt sein, wie dies die Figur 3 zeigt.

Die fertige Umhüllung 53 kann mit der Textilumhüllung 55 verklebt sein, um ein einfaches Abziehen zur Verarbeitung bzw. zum Verzehr zu gewährleisten. Ein mit einer derartigen Umhüllung 53 umgebenes Lebensmittel, beispielsweise eine Wurst, ist steril und räucherfähig.

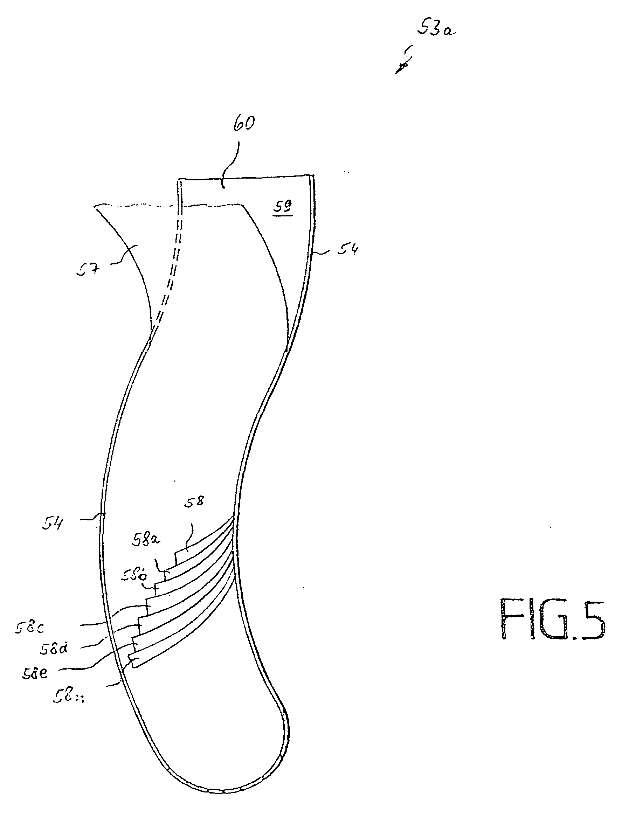

Die der in der Figur 5 dargestellte Umhüllung 53a besteht aus einer Verbundfolie 60, die aus einer Vielzahl Folienschichten 58 bis 58n aufgebaut ist. Die Folienschichten 58 bis 58n sind einzeln aufeinander aufgetragenen und einstückig miteinander verbundenen.

Die Umhüllungsoberfläche 59 der äußersten Folienschicht 58n ist mit einer Griffschutzfolie 57 umgeben. Die Griffschutzfolie 57 ist nicht mit der Folienschicht 58n verbunden und kann leicht von der Umhüllungsoberfläche 59 abgezogen werden. Die Griffschutzfolie 57 wird zusammen mit der Umhüllung 53a aus einer quasi endlosen Foliematerialbahn trenngeschweißt. Dazu wird um die Folienschichten 58 bis 58n eine weitere Folienschicht aus dem Material der Griffschutzfolie 57 gelegt. Die Folienschicht der Griffschutzfolie 57 ist dabei nicht mit der Umhüllungsoberfläche 59 der äußersten Folienschicht 58n verbunden.

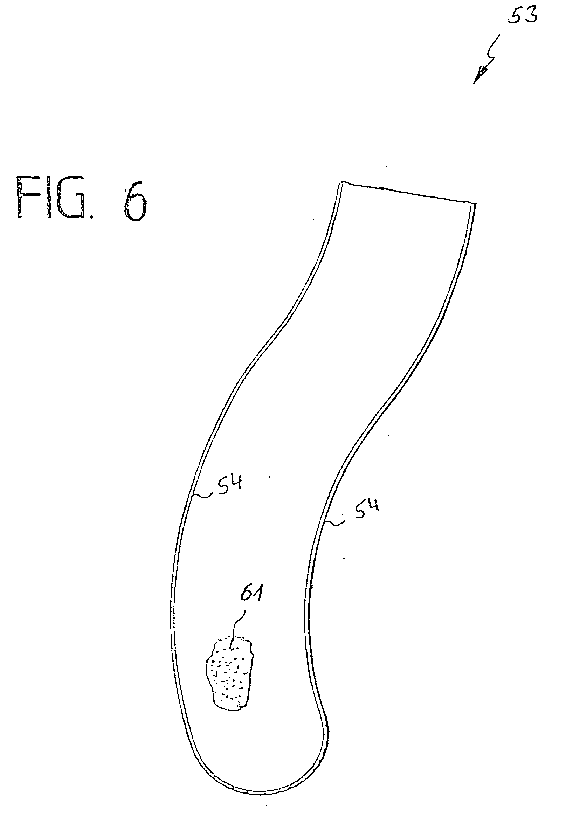

Um bei Rohwurst einen zur Reifung erforderlichen Wasserverlust zu ermöglichen, ist es bei einer weiteren Ausführung vorgesehen, die Umhüllung 53 bzw. 53a mit einer Mikroperforation 61 zu versehen, wie dies in der Figur 6 dargestellt ist.

Die Umhüllungsoberfläche 59 wird dazu mittels Laser oder ähnlichem gestippt, so dass Wasserdampf aus der reifenden Wurstmasse entweichen kann. Nach der Reifung kann eine derart perforierte Wurst mit einem Griffschutz aus einer Tauchfolie umgeben und vor weiterem Wasserverlust geschützt werden.

### Bezugszeichen

- 40: Trennschweißvorrichtung
- 41: Grundplatte
- 42: Außenkontur
- 43: Schweißkonturdraht
- 44: elektrischer Anschluß
- 45: Abdeckfolie
- 46: Folienmaterialbahn
- 47: Obertrum
- 48: Untertrum
- 49: *Anpressplatte*
- 50: Absenkvorrichtung
- 51: Förderrichtung
- 52: Schließrichtung
- 53, 53a: trenngeschweißte Umhüllung
- 54: Schweißnaht
- 55: Textilumhüllung
- 56: *aufgedruckte* Dekoration
- 57: Griffschutzfolie
- 58 - 58n: Folienschicht
- 59: Umhüllungsoberfläche
- *60*: *Verbundfolie*
- 61: Mikroperforation

## Patentansprüche

1. Formteil mit einer unregelmäßigen äußeren Kontur, das aus einer doppelt gelegten, quasi endlosen Folienmaterialbahn aus einem schweißbaren Kunststoff in einer die Materialbahnen verschweißenden und abtrennenden Trennschweißvorrichtung als Umhüllung für Lebensmittel herstellbar ist, **dadurch gekennzeichnet, dass** die Umhüllung (53) aus einer Mehrschichtfolie (58 bis 58n) besteht und mit einer abziehbaren Griffschutzfolie (57) umgeben ist.

2. Formteil nach Anspruch 1, **dadurch gekennzeichnet, dass** die abziehbare Griffschutzfolie (57) unverbunden mit der Umhüllungsoberfläche (59) und zusammen mit der Mehrschichtfolie (58 bis 58n) formgebend trenngeschweißt ist.

3. Formteil nach Anspruch 1, **dadurch gekennzeichnet, dass** die Mehrschichtfolie (58 bis 58n) mit einer wasserdampfdurchlässigen Mikroperforation (61) versehen ist.

4. Formteil nach Anspruch 1, **dadurch gekennzeichnet, dass** die äußerer Schicht (58n) der Mehrschichtfolie (58 bis 58n) mit einer Dekoration (56) versehen ist.

5. Formteil nach den Anspruch 4, **dadurch gekennzeichnet, dass** die äußerer Schicht (58n) der Mehrschichtfolie (58 bis 58n) mit einer erhabenen Dekoration (56) versehen ist.

6. Formteil nach Anspruch 1, **dadurch gekennzeichnet, dass** die verschweißte Umhüllung (53) mit einer Textilumhüllung (55) versehen ist.

7. Formteil nach Anspruch 6, **dadurch gekennzeichnet, dass** die mit der verschweißten Umhüllung (53) in Wirkverbindung bringbare Textilumhüllung (55) mit einer Dekoration (56) versehen ist.

8. Vorrichtung zur Herstellung einer trenngeschweißten Umhüllung (53) für Lebensmittel mit einer unregelmäßigen äußeren Kontur (42) aus einer Mehrschichtfolie (58 bis 58n), die eine aus einem Obertrum (47) und einem Untertrum (48) bestehende quasi endlose Folienmaterialbahn (46) aus einem schweißbaren Kunststoff aufweist, wobei die Folienmaterialbahn (46) in eine verschweißende und abtrennende, mit einem die Außenkontur (42) der Umhüllung (53) darstellenden, mit Schweißenergie beaufschlagbaren Schweißkonturdraht (43) aufweisende Trennschweißstation einlegbar ist, wobei die Folienmaterialbahn (46) auf eine Grundplatte (41) auflegbar ist und über dem Schweißkonturdraht (43) mit einer Anpressplatte (49) anpressbar ist.

9. Vorrichtung nach Anspruch 8, **dadurch gekennzeichnet, dass** die Grundplatte (41) eben und der auf der Grundplatte (41) aufgelegte eine geschlossene Außenkontur (42) bildende Schweißkonturdraht (43) mit einer Abdeckfolie (45) überdeckt ist.

10. Vorrichtung nach Anspruch 8, **dadurch gekennzeichnet, dass** der Schweißkonturdraht (43) elektrische Anschlüsse (44) aufweist, die von der Grundplatte (41) weggeführt sind und der Schweißkonturdraht (43) über die elektrischen Anschlüsse (44) mit elektrischer Kunststoffschweißenergie von variabler Stromstärke beaufschlagbar ist.

11. Vorrichtung nach Anspruch 8, **dadurch gekennzeichnet, dass** auf einer Grundplatte (41) mehrere voneinander getrennte Umhüllungsaußenkonturen (42) bildende Schweißkonturdrähte (43) angeordnet sind.

12. Vorrichtung nach Anspruch 8, **dadurch gekennzeichnet, dass** die Anpressplatte (49) die zu verarbeitende Foliematerialbahn (46) mit einem variablen Anpressdruck auf die mit Schweißenergie beaufschlagbaren Schweißkonturdrähte (43) presst.

13. Verfahren zur Herstellung einer formgebenden Umhüllung für Lebensmittel, mit einer unregelmäßigen äußeren Kontur, **dadurch gekennzeichnet, dass** ein computergesteuerter Laser über die doppelt gelegte Kunststofffolienmaterialbahn gefahren wird, der eine vorprogrammierte. Umhüllungsform ausschneidet und gleichzeitig das Obertrum und Untertrum der Folienmaterialbahn miteinander verschweißt.

## Claims

1. A formed part having irregular outer contours and shaped as an envelope for food products in severing and sealing apparatus from two superimposed layers of a quasi-endless film web of a hot-sealable plastics material, **characterized in that** envelope (53) consists of a multilayer film (58 to 58n) and is enclosed in a strippable grip protection film (57).

2. Formed part as in claim 1, **characterized in that** strippable grip protection film (57) is not connected with envelope surface (59) and is severed and sealed to multilayer film (58 to 58n) together therewith in a manner to impart the desired shape to both.

3. Formed part as in claim 1, **characterized in that** multilayer film (58 to 58n) has microperforations (61) therethrough for the transmission of water vapors.

4. Formed part as in claim 1, **characterized in that** outer layer (58n) of multilayer film (58 to 58n) has decorations (56) thereon.

5. Formed part as in claim 4, **characterized in that** outer layer (58n) of multilayer film (58 to 58n) has raised decorations (56) thereon.

6. Formed part as in claim 1, **characterized in that** sealed envelope (53) is provided with a textile cover (55).

7. Formed part as in claim 6, **characterized in that** textile cover (55), which is adapted to be connected to hot-sealed envelope (53) for cooperation therewith, has decorations (55) thereon.

8. Apparatus for making a severed-and-sealed envelope (63) for food products and having an irregular outer contours (42), said envelope consisting of a multilayer film (58 to 58n) comprising a quasi-endless film web (46) of a hot-weldable plastics material having a top run (47) and a bottom run (48), said film web (46) being adapted to be placed in a severing-and-sealing station which includes a seal contour wire (43) shaped to represent outer contour (42) of envelope (63) and adapted to have weld energy applied thereto, said film material web (46) being adapted to be placed on a base plate (41) and to be pressed down onto weld contour wire (43) by means of a pressing plate (49).

9. Apparatus as in claim 8, **characterized in that** bottom plate (41) is planar and **in that** weld contour wire (43) placed on base plate (41) and forming a closed outer contour (42) thereon is covered by a covering film (45).

10. Apparatus as in claim 8, **characterized in that** weld contour wire (43) has electrical terminals (44) extended away from base plate (41) and **in that** weld contour wire (43) is adapted to have electric plastics welding energy of variable current intensity applied thereto through said electrical terminals (44).

11. Apparatus as in claim 8, **characterized in that** base plate (41) has thereon a plurality of weld contour wires (43) forming separate outer envelope contours (42).

12. Apparatus as in claim 8, **characterized in that** pressure plate (49) urges the film material web (46) to be lowered onto weld seal contour wires (43) with variable pressure, said wires adaped to receive weld sealing energy.

13. A process for making a shape-imparting envelope having irregular outer contours and intended to envelope food products, **characterized by** moving a computer-controlled laser over a doubled-up plastics film material web, said laser cutting a pre-programmed envelope shape from said web and at the same time hot-sealing the top and bottom runs of said film material web to each other.

## Revendications

1. Élément de façonnage présentant un contour extérieur irrégulier, qui peut être fabriqué à partir d'une bande de film double quasi sans fin en une matière plastique soudable, dans un dispositif de séparation-soudage soudant les bandes et les coupant, en tant qu'enveloppe pour aliments, **caractérisé en ce que** l'enveloppe (53) est composée d'un film multicouche (58 à 58n) et est entourée par un film de protection et de préhension (57) pouvant être retiré.

2. Élément de façonnage selon la revendication 1, **caractérisé en ce que** le film de protection et de préhension (57) pouvant être retiré subit une opération de séparation-soudage au cours de laquelle il n'est pas relié à la surface (59) de l'enveloppe et est façonné avec le film multicouche (58 à 58n).

3. Élément de façonnage selon la revendication 1, **caractérisé en ce que** le film multicouche (58 à 58n) est doté d'une microperforation (61) perméable à la vapeur d'eau.

4. Élément de façonnage selon la revendication 1, **caractérisé en ce que** la couche extérieure (58n) du film multicouche (58 à 58n) est munie d'une décoration (56).

5. Élément de façonnage selon la revendication 4, **caractérisée en ce que** la couche extérieure (58n) du film multicouche (58 à 58n) est munie d'une décoration en relief (56).

6. Élément de façonnage selon la revendication 1, **caractérisé en ce que** l'enveloppe soudée (53) est munie d'une enveloppe textile (55).

7. Élément de façonnage selon la revendication 6, **caractérisé en ce que** l'enveloppe textile (55) pouvant être mise en liaison active avec l'enveloppe soudée (53) est dotée d'une décoration (56).

8. Dispositif pour fabriquer une enveloppe (53) pour aliments ayant subi une opération de séparation-soudage, qui présente un contour extérieur irrégulier (42) et qui est fabriquée à partir d'un film multicouche (58 à 58n) constitué par une bande de film (46) en matière plastique soudable quasiment sans fin composée d'une partie supérieure (47) et d'une partie inférieure (48), sachant que la bande de film (46) peut être placée dans une station de séparation-soudage soudant et séparant équipée d'une électrode périphérique à fil plein (43) qui forme le contour extérieur (42) de l'enveloppe (53) et qui peut être sollicitée par de l'énergie de soudage, la bande de film (46) pouvant être posée sur une plaque de base (41) et être appliquée à l'aide d'une plaque d'application (49) au-dessus de l'électrode périphérique à fil plein (43).

9. Dispositif selon la revendication 8, **caractérisé en ce que** la plaque de base (41) est plane et l'électrode périphérique à fil plein (43) posée sur la plaque de base (41) et formant un contour extérieur fermé (42) est recouverte d'un film de recouvrement (45).

10. Dispositif selon la revendication 8, **caractérisé en ce que** l'électrode périphérique à fil plein (43) présente des bornes de raccordement électriques (44) qui partent de la plaque de base (41), et **en ce que** l'électrode périphérique à fil plein (43) peut être sollicitée via les bornes de raccordement électriques (44) par de l'énergie électrique pour souder de la matière plastique, dont l'intensité est variable.

11. Dispositif selon la revendication 8, **caractérisé en ce que** plusieurs électrodes périphériques à fil plein (43) formant des contours extérieurs (42) d'enveloppe séparés les uns des autres sont disposées sur la plaque de base (41).

12. Dispositif selon la revendication 8, **caractérisé en ce que** la plaque d'application (49) applique avec une pression d'application variable la bande de film (46) à transformer sur les électrodes périphériques à fil plein (43) pouvant être sollicitées par de l'énergie de soudage.

13. Procédé pour fabriquer une enveloppe façonneuse pour aliments présentant un contour extérieur irrégulier, **caractérisé en ce qu'**un rayon laser piloté par ordinateur passe sur la bande de film en matière plastique posée en double épaisseur, lequel rayon laser découpe une forme d'enveloppe préprogrammée et, simultanément, soude la partie supérieure à la partie inférieure de la bande de film.
